# EUROPEAN PATENT SPECIFICATION

(11) **EP 3 874 321 B1**
(45) Date of publication and mention of the grant of the patent: **05.01.2022**
(21) Application number: 20817337.7
(22) Date of filing: 02.12.2020
(51) Int. Cl.: G02B 27/01

(54) **MIXED, VIRTUAL AND AUGMENTED REALITY HEADSET AND SYSTEM**
KOPFHÖRER DER GEMISCHTEN, VIRTUELLEN UND ERWEITERTEN REALITÄT UND SYSTEM
CASQUE ET SYSTÈME DE RÉALITÉ AUGMENTÉE, VIRTUELLE ET MIXTE

(30) Priority: 05.12.2019 ES 201931087
(43) Date of publication of application: 08.09.2021
(73) Proprietor: AR-VR Meifus Engineering S.L., 36419 Mos Pontevedra (ES)
(72) Inventor: FERNÁNDEZ HERMIDA, Isidro, 36201 Vigo - Pontevedra (ES)
(74) Representative: Clarke Modet & Co.
(86) International application number: PCT/EP2020/084288
(87) International publication number: WO 2021/089882

(56) References cited:
- CN-A- 111 051 963
- US-A1- 2017 045 746
- US-A1- 2020 159 027
- US-A1- 2020 319 470
- US-B2- 10 234 688

## Description

### Field of the invention

The present invention is encompassed within the field of the virtual, mixed and augmented reality viewing devices, and particularly the headsets or glasses used for said purposes.

### Background of the invention

At present, there are virtual reality headsets or glasses intended exclusively for virtual reality, augmented reality headsets or glasses aimed solely at representing augmented reality, and mixed reality headsets or glasses for the sole purpose of representing mixed reality. US 10 234 688 discloses a head up display in which the user can switch between mixed reality display and virtual display.

However, there is no device that brings together the three functionalities. The present invention solves this problem by presenting, in a single device, three operating modes: mixed reality, virtual reality and augmented reality.

### Description of the invention

The invention relates to a mixed, virtual and augmented reality headset and system. The headset (or glasses) of the present invention is a device which allows automatically switching between mixed reality, augmented reality or virtual reality representation.

The headset includes a front casing prepared for being placed on the head of a user and secured thereto by means of fixing elements. The front casing has a housing suitable for receiving a smartphone. The headset has a (semi-transparent) holographic display configured for reflecting a projected image via the display of the smartphone and simultaneously allowing the user to see through same, receiving an exterior image of the surrounding reality or environment.

The headset comprises at least one motorised mirror and two motorised lenses configured for being located, by the action of motors, in one of at least two different positions:
- When the headset operates in mixed reality mode, the motorised mirror and the motorised lenses are placed in a withdrawn position, outside the field of view of the user.
- When the headset operates in virtual or augmented reality mode, the motorised mirror is placed in an extended position in front of the holographic display, in the field of view of the user, for reflecting the projected image via the display of the smartphone. In turn, the motorised lenses are located in an extended position in front of the pupils of the user, between the holographic display and the pupils of the user.

For the augmented reality mode, a mirror system is in charge of capturing the real external image with respect to the headset (coming from the surrounding reality or environment, which the user would see if he or she was not wearing the headset) using the rear camera of the smartphone, as the real external image is reflected in the mirror system and captured by the lens of the rear camera.

A control unit of the headset is in charge of controlling the position of the motorised lenses and motorised mirror. The headset can thereby automatically switch between mixed reality, virtual reality or augmented reality representation.

The present invention also relates to a mixed, virtual and augmented reality system comprising a headset, as previously defined, and a smartphone housed in the front casing of the headset. The smartphone is configured for establishing wireless communication with the control unit of the headset for determining a current operating mode of the headset among a plurality of operating modes (virtual reality mode, augmented reality mode, mixed reality mode).

When the headset is operating in augmented reality mode, the smartphone is configured for acquiring a real external image reflected by the mirror system of the headset, composing an augmented image from the acquired image and showing the augmented image on the display of the smartphone. In the mixed reality operating mode, the smartphone projects an image generated by an application of the telephone onto the holographic display.

### Brief description of the drawings

What follows is a very brief description of a series of drawings that aid in better understanding the invention, and which are expressly related to an embodiment of said invention that is presented by way of a non-limiting example of the same.
Figures 1A and 1B illustrate the insertion system for inserting the smartphone into the front casing of the headset 1.
Figures 2A, 2B and 2C illustrate the three operating modes of the headset: mixed reality (Figure 2A), virtual reality (Figure 2B) and augmented reality (Figure 2C).
Figures 3A-3F show an embodiment of a motorised mirror and lens and their respective mechanical transmission systems.
Figures 4A and 4B illustrate the mirror system used in the augmented reality mode.
Figures 5A and 5B illustrate the rotational aperture system of the headset for having a clear field of view when the headset is not in use.
Figure 6 shows the headset in the folded position.
Figures 7A and 7B illustrate the system of retractable headphones.
Figure 8 shows a block diagram with electronic elements of a mixed, virtual and augmented reality system according to the present invention.

### Detailed description of the invention

The present invention relates to a device with a triple functionality, since it can operate as a mixed reality headset, as a virtual reality headset or as an augmented reality headset.

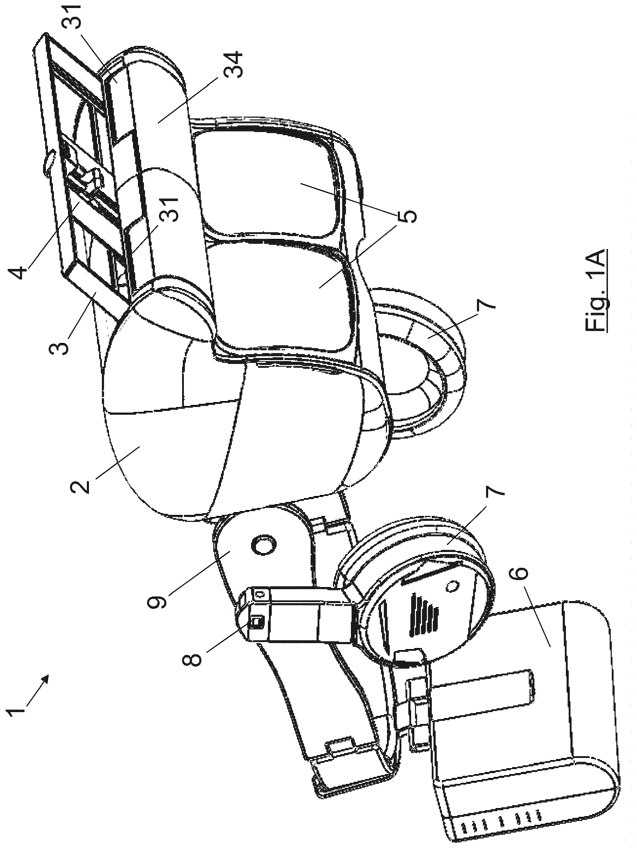

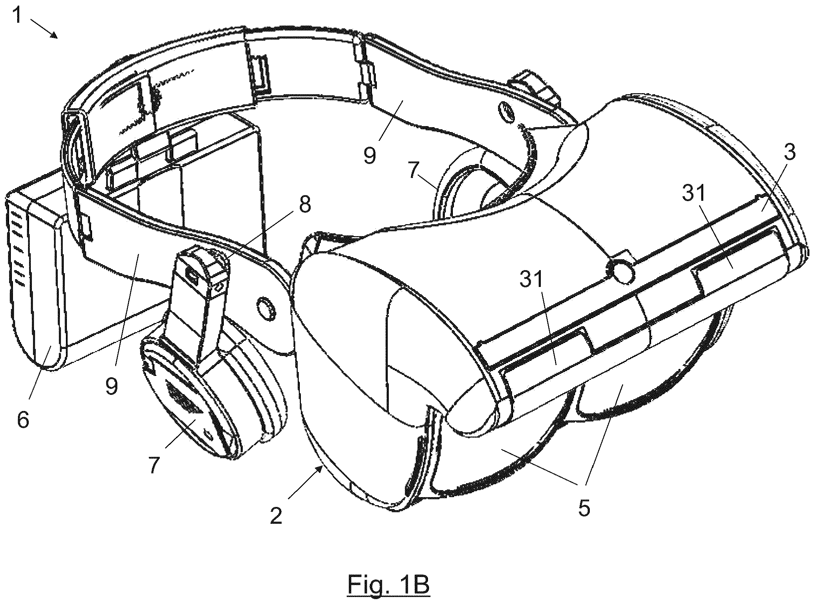

The mixed, virtual and augmented reality headset of the present invention is prepared for holding a smartphone in its interior. **Figures 1A** and **1B** illustratively depict an embodiment of the insertion system for inserting the smartphone into a housing in the front casing 2 of the headset 1. According to the embodiment shown, the insertion system comprises a tray 3 located in the upper portion of the front casing 2 with a housing suitable for receiving a smartphone (for greater clarity of the elements of the tray 3, the smartphone is not depicted in the figure). Side guides inside the front casing 2 allow the extraction and introduction of the tray 3.

In one embodiment, the tray 3 is extracted in its entirety to allow the comfortable insertion of the smartphone. Alternatively, the tray can be retractable, with a limit position in the tray opening or extraction movement. The housing in the tray 3 may have adjustment elements or guides which allow the dimensions of the housing to be adjusted to different smartphone sizes. For example, in the embodiment shown in Figure 1A the tray 3 has adjustment elements or guides 4 which allow adjustments to be made to the size of the housing in the length and width dimensions of the smartphone. Adjustment elements for adjusting the thickness of the housing so as to be adapted to different smartphone thicknesses may also be incorporated.

Once the smartphone has been inserted into the housing of the tray 3, the tray 3 is again introduced inside the front casing 2, being in a closed position as illustrated in Figure 1B.

The front casing 2 is suitable for being placed on and secured to the head of a user. To allow better securing, the headset 1 may have fixing elements for fixing the front casing, such as straps, Velcro, etc.

The image shown at least partially on the display of the smartphone is projected directly onto a holographic display 5 located in the front portion of the headset, within the field of view of the user. The holographic display is formed by 2 semi-transparent portions, one for each eye, with the property of being able to reflect the projected image via the display of the smartphone and simultaneously allowing the user to see through same for receiving an exterior image of the reality surrounding the headset 1. The holographic display has the characteristic of being semi-transparent whereby it is possible to see through it but it allows seeing the projection of the smartphone in a reflected manner such that real images seen through the holographic display can be superimposed with the image generated in the smartphone projected onto the holographic display.

The headset 1 comprises a control unit, preferably based on a processor or a microcontroller, powered by at least one battery. The control unit and the battery are housed inside a rear casing 6, located in the rear portion of the headset 1 (being located behind the nape of the neck of the user when in use), as can be seen in the embodiment of Figures 1A and 1B. Said figures also show other elements of the headset 1, such as headphones 7, for example, which can be adapted to the ears of the user by means of an articulated rotation mechanism 8 supported on a side band 9, which is adapted to the sides of the head of the user and allows being used as a mechanical connection element between the front casing 2 and the rear casing 6.

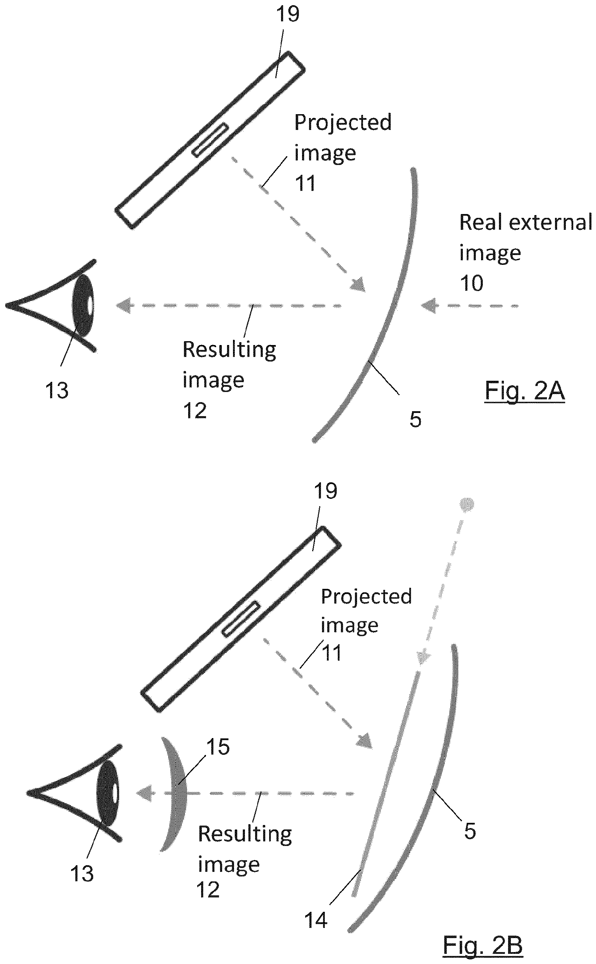

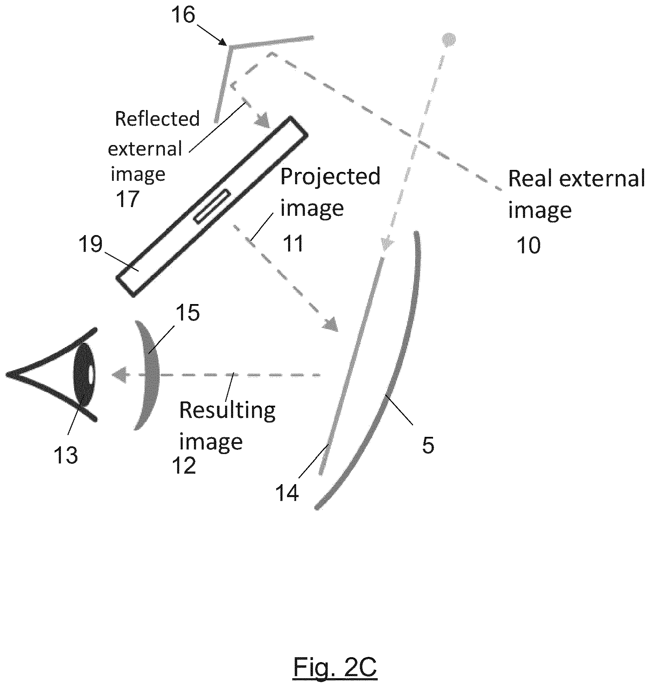

The three functions of the headset 1 (mixed reality, virtual reality and augmented reality) are schematically depicted in the side view of **Figures 2A, 2B** and **2C****,** respectively.

The headset 1 can operate as a mixed reality headset, as shown in Figure 2A. In this case, a real external image 10 (real image coming from the environment) is combined with a projected image 11 onto the holographic display 5, since the holographic display 5 allows seeing through same. The resulting image 12 is captured by the pupils 13 of the user.

For operating in the second and third operating modes, i.e., virtual reality and augmented reality, the headset 1 has at least one motorised mirror 14 and two motorised lenses 15. The motorised mirror 14, whether it is a single motorised mirror common for both eyes or one motorised mirror for each eye, is placed in an extended position in front of the holographic display 5, within the field of view of the user. The motorised lenses 15 are placed in an extended position, in front of the pupils of the user, between the pupils 13 of the user and the motorised mirror 14 in the extended position.

In the virtual reality mode (Figure 2B), the motorised mirror 14 is in charge of reflecting the projected image 11 coming from the display of the smartphone 19. In this case, the resulting image 12 is the projected image 11 properly reflected by the motorised mirror 14, as the mirror is opaque and does not allow any real external image 10 to pass therethrough. The motorised lenses 15 allow correctly focusing the resulting image 12, taking into account the small distance between the motorised mirror 14 and the pupils 13. The lenses are preferably convex-concave type lenses, with a focal distance equivalent to the sum of the projector to mirror and mirror to lens distances.

The augmented reality mode (Figure 2C) further requires a mirror system 16 configured for reflecting a real external image 10 with respect to the headset, coming from the environment, towards at least one camera of the smartphone (preferably a rear camera). In a manner similar to virtual reality mode, the resulting image 12 is also the projected image 11 once it is reflected by the motorised mirror 14.

In the virtual reality mode, the smartphone 19 represents a stereoscopic virtual scene achieved by the projection of two split images onto the display of the smartphone, one for each eye, generated by the processor of the smartphone (and therefore without any necessary link to the surrounding reality). In the augmented reality mode, the smartphone 19 acquires, using at least one of its cameras, the real external image 10 reflected by the mirror system 16 of the headset 1 (i.e., the reflected external image 17) and uses said reflected external image 17 coming from the surrounding reality for composing an augmented image from the acquired real external image (for example, by adding an additional element in the real image), showing on the display the augmented image, which is projected onto the motorised mirror 14.

The motorised mirror 14 is therefore configured for being located in one of at least two possible positions, based on the chosen operating mode:
- A withdrawn position outside the field of view of the user to allow the user to see the holographic display 5, when the headset operates in the mixed reality mode (Figure 2A).
- An extended position in front of the semi-transparent holographic display for reflecting the projected image via the display of the smartphone 19, when the headset operates in virtual reality mode (Figure 2B) or in augmented reality mode (Figure 2C).

Similarly, the motorised lenses 15 are also configured for being located in one of at least two possible positions, based on the operating mode of the headset: in a withdrawn position, outside the field of view of the user (mixed reality mode, Figure 2A), or in an extended position in front of the pupils of the user (virtual or augmented reality mode, Figures 2B and 2C).

The control of the position of the motorised lenses 15 and of the at least one motorised mirror 14 is performed by a battery-powered control unit.

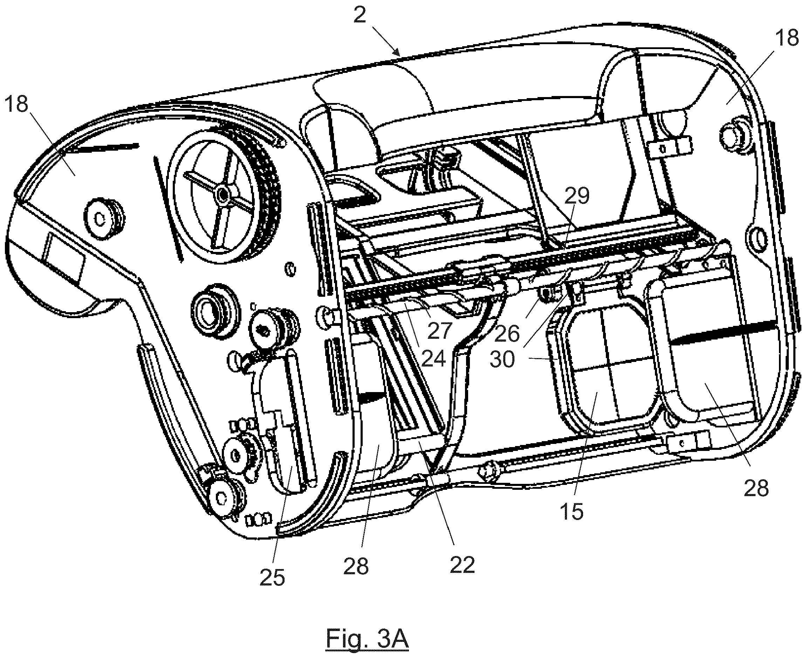

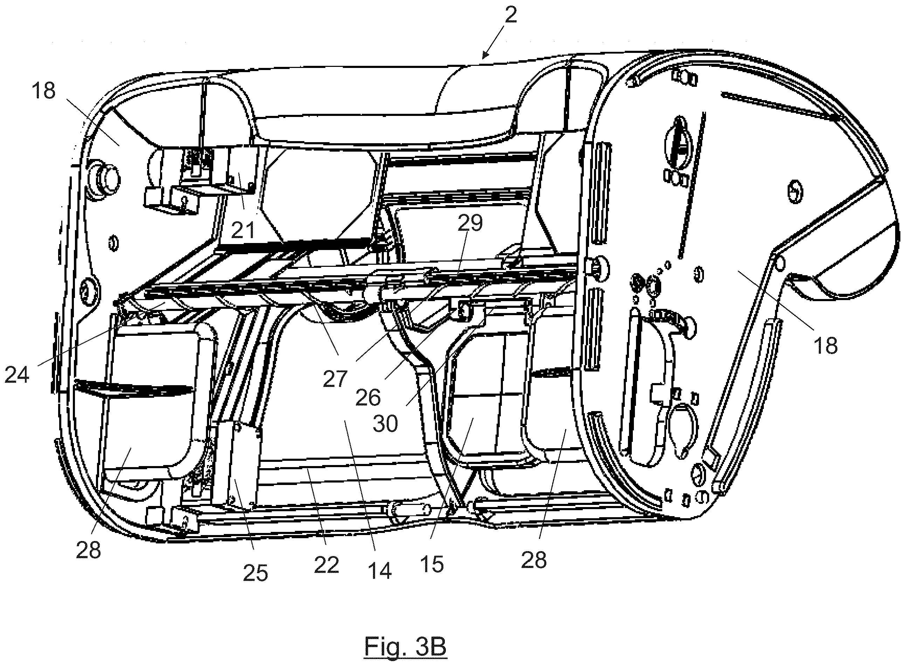

**Figures 3A** and **3B** show two rear views of the interior of the front casing 2, where the elements used for the motorisation of the at least one mirror and the motorisation of the lenses can be seen. For greater clarity, only one motorised mirror 14 (the left one) and one motorised lens 15 (the right one) are depicted.

According to the embodiment shown in Figures 3A and 3B, the headset 1 comprises a mirror mount 22 mounting two motorised mirrors (14), one for each eye. The mirror mount 22 is guided on the sides 18 of the front casing 2 by a mechanical transmission system operated by one or several first motors 21 (e.g., servomotors) from a withdrawn position in the upper portion of the front casing 2 to an extended position in front of the field of view of each respective eye of the user (or vice versa, operated from the extended position to the withdrawn position). Two first motors 21 on both sides of the front casing 2 are preferably used for being able to correctly drive the mirror mount 22 and to synchronously prevent deviations in the path of the movement.

Figures 3A and 3B show one of the two mirrors included inside the mirror mount 22, in the extended position. The mechanical transmission system of the motorised mirrors 14 is a kinematic chain which converts the rotation of the shaft of the first motors 21 into a lifting or lowering movement of the mirror mount 22, laterally guided in the body of the front casing 2. The kinematic chain can be formed, for example, by any combination of gear wheels and/or transmission belts, among other possible mechanical transmission elements.

The lifting and lowering movement of the motorised mirror 14 is performed linearly, as schematically shown in Figure 2B, a slight change in angle of the mirror being caused in this movement to allow the motorised mirror to be better adapted to the shape of the front casing 2, reducing the space occupied by the mirror inside the casing. According to the embodiment shown, the mechanical transmission is achieved by two first motors 21 (particularly two servomotors), with one placed on each side of the front casing 2 causing a gear wheel to rotate. By means of two other gear wheels, placed in line with the movement of the mirror mount 22, and a cog belt, the rotational movement of the servomotors is translated into a translational movement of the mirror mount 22 on the guided path configured for such purpose. Other possible embodiments of mechanical transmission systems can be used, provided that they are able to extend and withdraw the motorised mirrors 14 in and out of the field of view of the user, respectively.

The mechanical transmission system of the motorised lenses 15 comprises at least a first transmission shaft 24 operated by at least one motor (e.g., servomotor) through a kinematic chain (e.g., transmission belts, gear wheels, etc.). The first transmission shaft 24 is oriented in the direction perpendicular to the sides 18 of the front casing 2 (i.e., in the direction parallel to the eyes of the user). In the embodiment shown, the first transmission shaft 24 is a threaded shaft (for example, a screw) coupled by means of a thread 27 to a first threaded mount 26 of the motorised lenses 15, converting the rotation of the first transmission shaft 24 into a linear movement of the motorised lenses 15 in the direction perpendicular to the sides 18 of the front casing 2. To prevent the rotation of the first threaded mount 26, an upper planar portion of the first threaded mount 26 contacts a guide 29 of the front casing 2.

The motorised lenses 15 are located in the withdrawn position next to the sides 18 of the front casing 2, behind tabs 28 attached to the sides 18. In order to reach the extended position, the motorised lenses 15 are moved towards the central portion in opposite directions (the left lens moves to the right and the right lens moves to the left). If a single first transmission shaft 24 is chosen to be used, by means of adapting the orientation of the thread 27 of the first transmission shaft, the forward movement direction of each mirror can be configured, as shown in the threading of Figure 3A (the threading of the left portion of the first transmission shaft with right-handed forward movement direction and the threading of the right portion of the first transmission shaft 24 with left-handed forward movement direction). The first transmission shaft 24 places the lenses at a mean interpupillary distance (e.g., 60 mm). Alternatively, two first independent transmission shafts 24 could be used, each one independently controlling the movement of each lens.

The mechanical transmission system of the lenses further comprises two other transmission shafts (second transmission shafts) moved by respective second motors 25 located on the sides 18 of the front casing 2, one for each lens, in charge of linearly moving with precision, in the direction parallel to the eyes of the user, a lens mount 30 (or lens holder) of each of the lenses between the two ends of the first threaded mount 26 to the exact position in the centre of the pupils 13 of the eyes of the user, using an eye tracking system. The second transmission shafts are operated by helices, in turn operated by the second side motors 25 (particularly servomotors) of the front casing 2, which drive a shaft with a rigid stop, which moves the lens mount 15 with precision corresponding to the exact interpupillary distance of each person and move them laterally during use when the user deviates his or her gaze from the central position on each of the sides, thus always keeping the lens in the centre of the pupil of the user. The first transmission shaft 24 can be considered an element for making a first coarse adjustment of the extension of the lenses, placing them at a predetermined mean interpupillary distance, whereas the second transmission shafts are in charge of making a fine adjustment in the position of the lenses, by means of using an eye tracking system, for placing them exactly in the centre of the pupil of the current user of the headset.

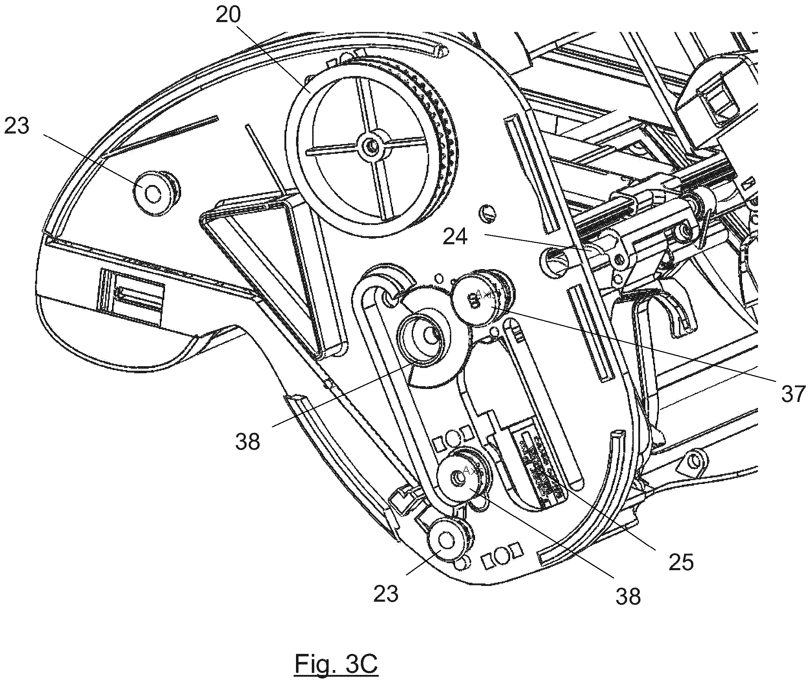

**Figures 3C-3F** depict in greater detail the elements of the mechanical transmission system of the motorised mirrors 14 and of the motorised lenses 15 according to a possible embodiment.

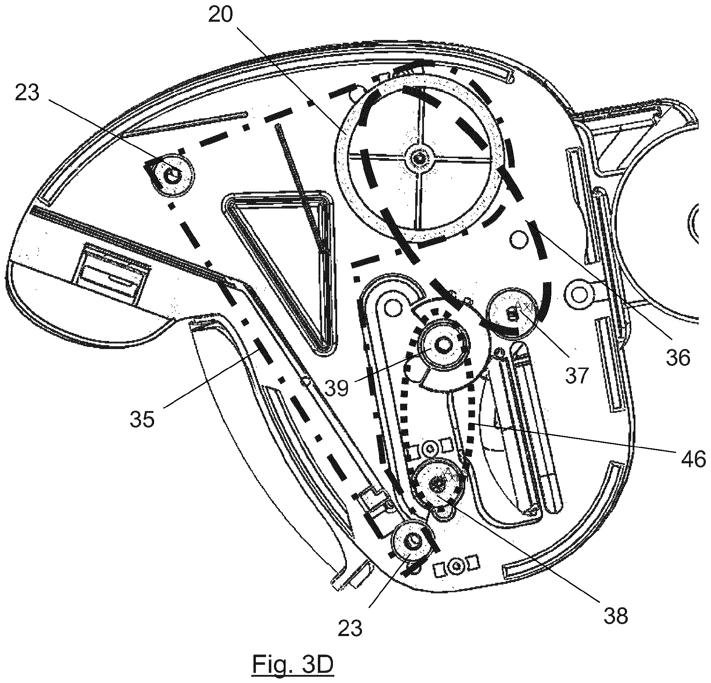

The mechanical transmission system of the motorised mirrors 14 comprises a double acting drive pinion 20, operated by the first motors 21, and two guide pinions 23 of a transmission belt of the mirror mount 35, depicted in Figure 3D, which transmits movement to the mirrors.

The mechanical transmission system of the motorised lenses 15 comprises a coarse adjustment system and a fine adjustment system for the lenses. The coarse adjustment system comprises the double acting drive pinion 20, which is formed by two gear wheels. One of the gear wheels transmits the movement of the first motors 21 to the mirrors, using the transmission belt of the mirror mount 35, and the second gear wheel transmits the movement to the first transmission shaft 24 through a lens movement transmitting pinion 36 using a lens movement transmission belt 37, depicted in Figure 3D. Therefore, when the first motors 21 are activated, the mirrors and lenses are simultaneously moved from their withdrawn position to their extended position, or vice versa. In the case of the lenses, they are moved to an extended initial position (coarse adjustment of the lenses). The fine adjustment system for the lenses is then activated for extending the lenses to a final position, right in front of the pupils 13 of the user, controlled by the eye tracking system.

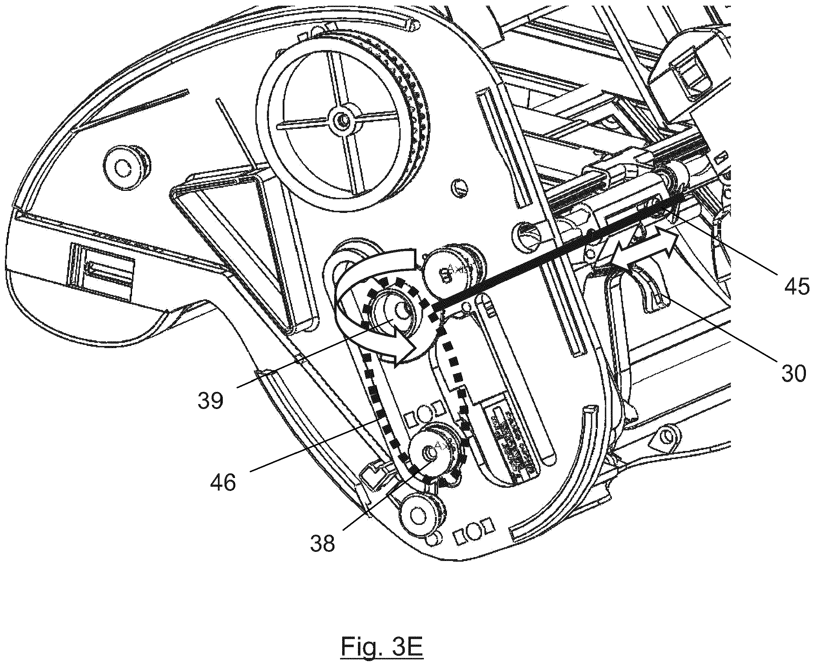

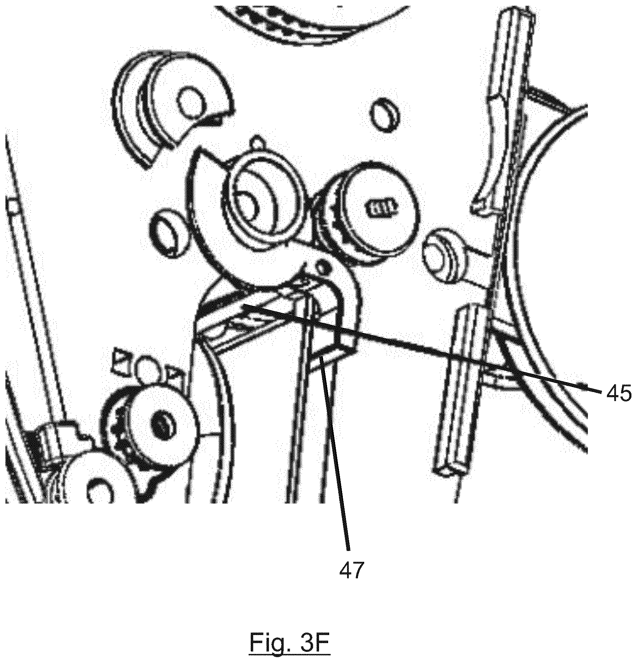

The fine adjustment system for each lens, depicted in Figures 3E and 3F, comprises a fine lens adjustment drive pinion 38, operated by the second motor 25, which transmits the rotational movement to a fine adjustment helical pinion 39 by means of a fine lens adjustment transmission belt 46. The fine adjustment helical pinion 39 acts on a cam 47 of the end of the second transmission shaft 45. The second transmission shaft 45 is an actuating shaft of the lens mount 30, a shaft which is attached to the lens mount 30 converting the rotational movement of the fine adjustment helical pinion 39 into translational movement as it copies the travel of the helix, thus adjusting the final extension position of the lens mount 30.

In the virtual reality and augmented reality modes, the motorised lenses 15 are moved to an extended position. The motorised lenses 15 are first moved to a predetermined position, configurable in the control unit (a mean or standard interpupillary distance). Additionally, an eye tracking system comprising two cameras positioned in the front portion of the device (not shown in the figures) is used for detecting the position of the pupils of the user. The control unit of the headset 1 receives the information from said cameras and controls the position of the motorised lenses 15 based on the detected position of the pupils, by means of controlling the motors of the second transmission shafts. A fine adjustment of the position of the lenses is thereby performed so that they are aligned in the centre of each pupil, thus being adapted to the physical characteristics of each user (e.g., to the specific interpupillary distance of the user).

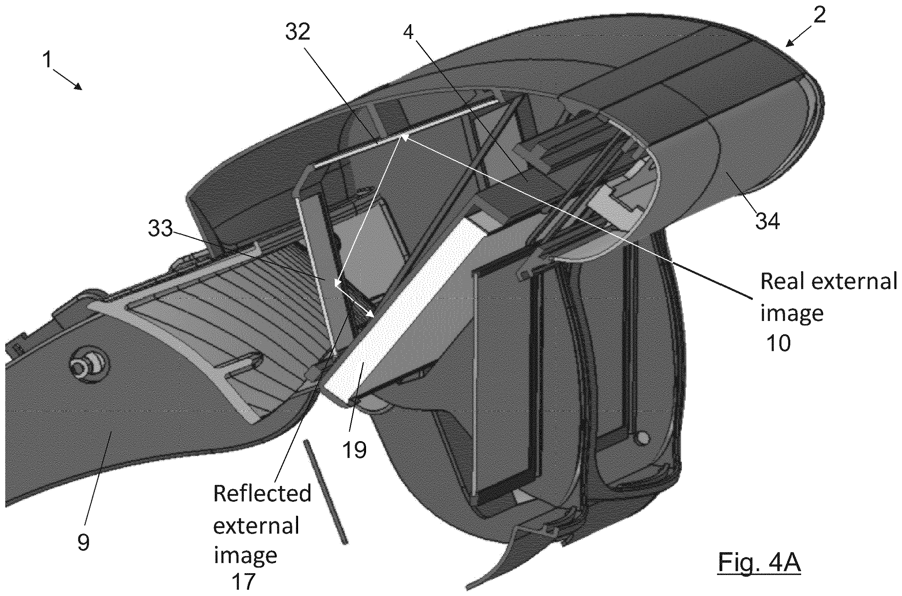

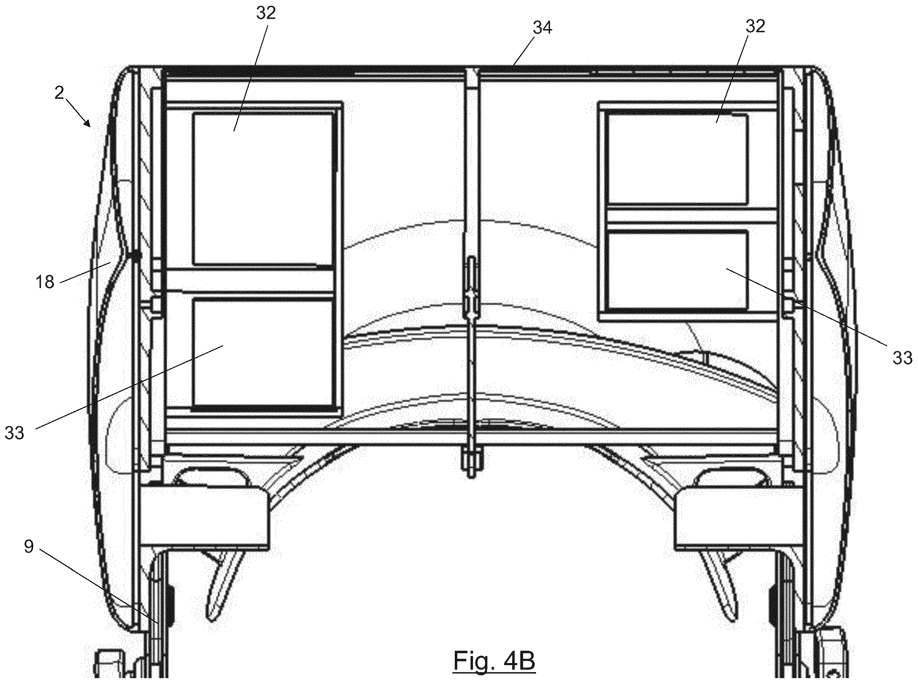

**Figures 4A** and **4B** depict a possible embodiment of the mirror system 16 used in the augmented reality mode (Figure 2C). The mirror system 16 comprises a first mirror 32 configured for receiving and reflecting a real external image 10 coming from the exterior of the front casing 2 (an image of the environment received through one or several transparent front pieces of glass 31 located in the front portion of the headset, next to a front portion 34, as depicted in Figures 1A and 1B), and at least one additional mirror for reflecting the reflected external image 17 in a rear camera of the smartphone 19. In one embodiment, the mirror system comprises one or several mirror assemblies, each assembly formed by a first mirror 32 and at least one additional mirror (second mirror 33) properly oriented so that the reflected external image 17 which is reflected by at least one of the mirror assemblies strikes one of the cameras of the smartphone 19. In the embodiment shown in the figures, two mirror assemblies are used on both sides of the front portion 34 to be able to cover the different smartphone models on the market. The smartphone 19 thereby obtains the reflection of the real external image 10 from the string of mirrors. In the embodiment shown in the figures, the front portion 34 and the transparent front pieces of glass 31 are integrated in a single part, a heat-formed piece of glass.

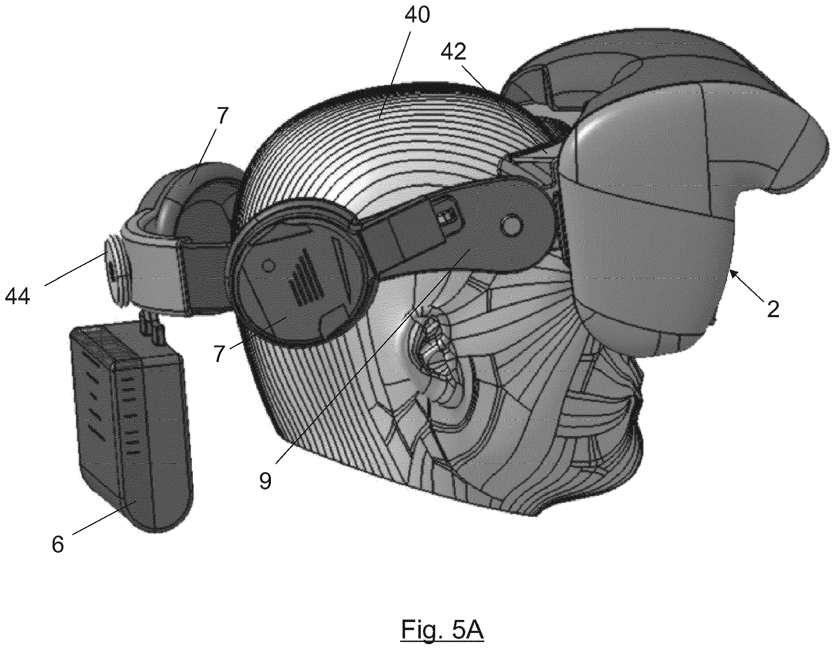

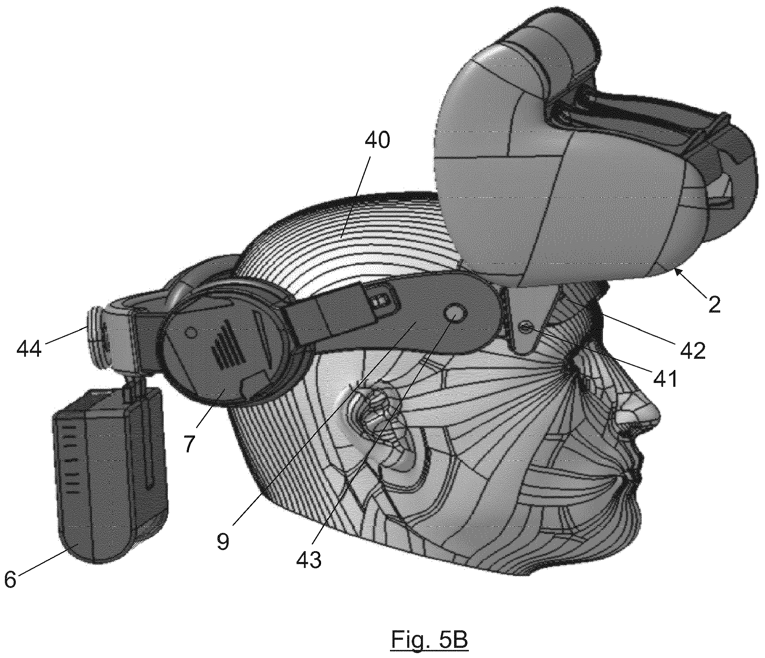

**Figures 5A** and **5B** illustrate the rotational aperture system which allows having a clear field of view when the headset 1 is fitted to the head 40 of a user but is not in use. To that end, the headset 1 has an articulation 41 between the front casing 2 and a front support band 42 contacting the forehead of the user, with initial and final position stops which allow the aperture thereof such that the visual field is cleared for the user. The front support band 42 is in turn attached to the side band 9 by means of an articulation 43 which allows the relative rotation between same, to facilitate the folding of the assembly when it is not in operation. The headset 1 also has an adjustment wheel 44 which allows the adjustment of the length of the side band 9 to the dimensions of the head 40 of the user.

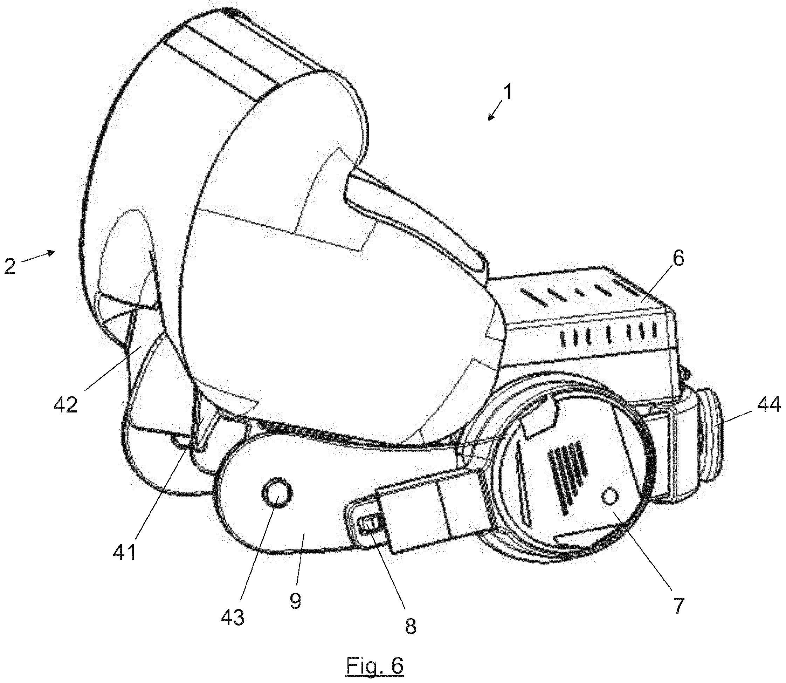

**Figure 6** shows the headset 1 completely folded, prepared for being packaged, for example. To that end, the headset 1 comprises two articulations, one for folding the front casing 2 and another one for folding the rear casing 6 with the electronics, with initial and final position stops.

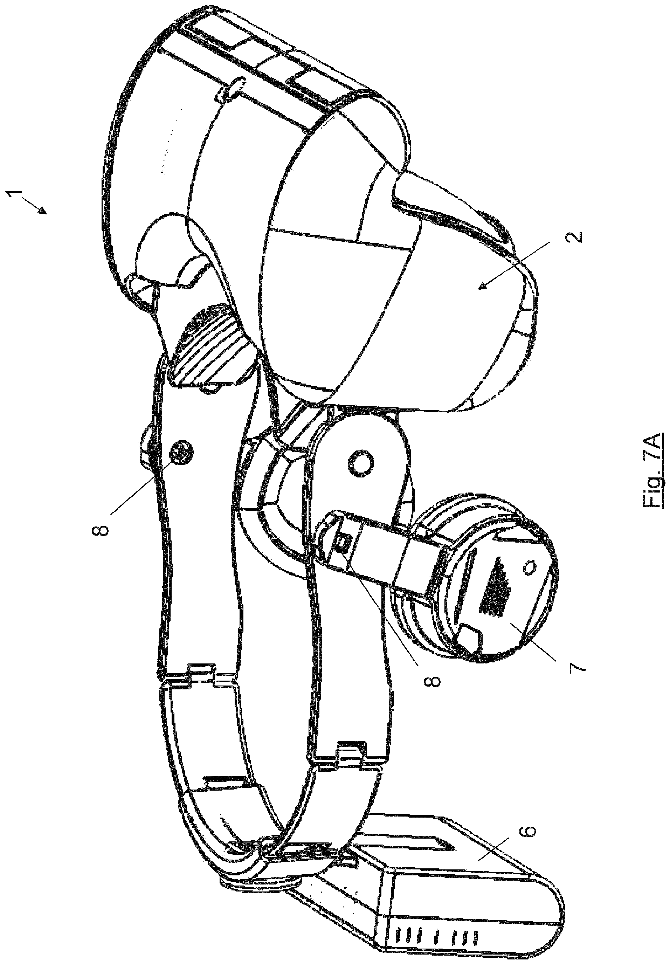

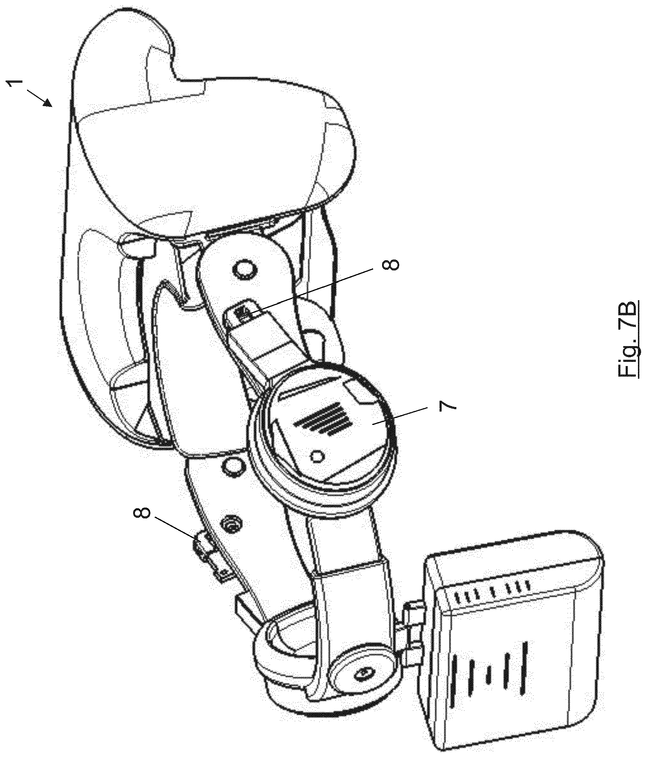

**Figures 7A** and **7B** depict a system of retractable headphones, where the headsets or headphones 7 are integrated with an articulated rotation mechanism 8 which allows adjusting the position to the user and the folding thereof to a packaging position.

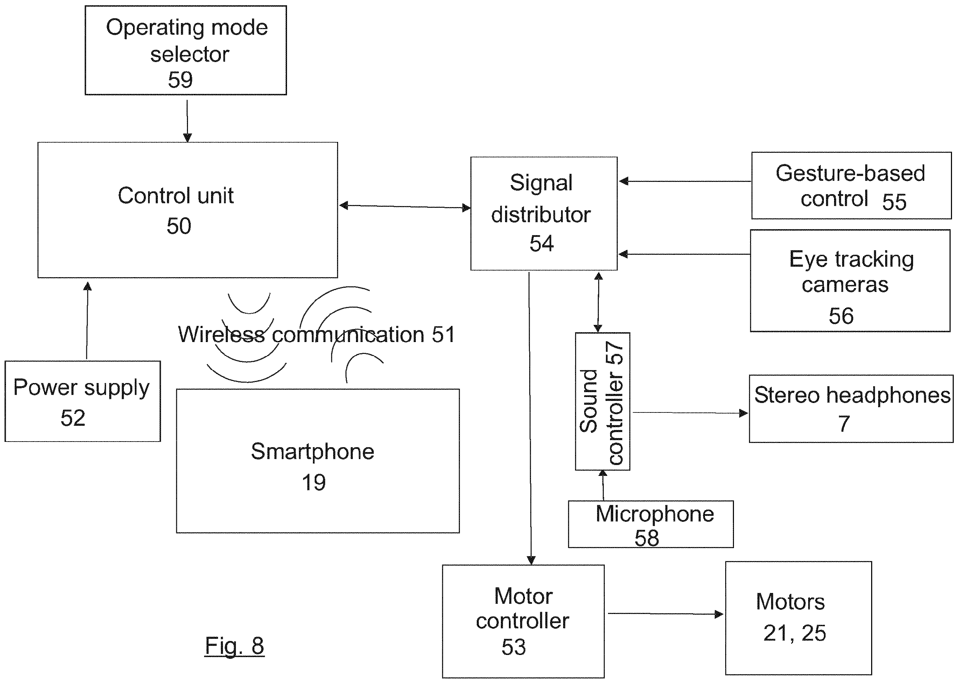

Finally, **Figure 8** depicts a schematic diagram of the elements of a mixed, virtual and augmented reality system formed by the headset 1 and a smartphone 19 housed in the front casing 2 of the headset. The control unit 50 of the headset 1 and the smartphone 19 are configured for establishing two-way wireless communication 51 between same, for example a Bluetooth connection.

Through said connection, the smartphone 19 can determine the current operating mode of the headset. Thus, when the smartphone 19 detects that the headset is operating in augmented reality mode, the smartphone 19 is configured for acquiring, by means of one of its rear cameras, a reflected external image 17 reflected by the mirror system 16 of the headset, composing an augmented image from the acquired image and showing the augmented image on its display.

Figure 8 also shows the rest of the electronic components that the headset may use: power supply 52 (by means of one or several batteries), motor controller 53 for the control of the motors (first motors 21 and second motors 25), signal distributor 54, cameras 56 for eye tracking, sound controller 57 for headphones 7, microphone 58, and gesture-based control system 55. The gesture-based control system 55 is a system which in virtual reality mode allows the virtualisation of the hands in order to interact with the environment, and in mixed reality or augmented reality mode it detects the hands of the user (using one or more front and/or side cameras located in the front casing 2) in order to perform operations with graphic parts existing in reality. The gesture-based control system 55 can alternatively be replaced with the rear camera of the smartphone using the existing mirror system 16, as this same function is integrated in state-of-the-art smartphones.

In one embodiment, the headset 1 has an operating mode selector 59, connected to the control unit 50 of the headset. Through the operating mode selector 59, the user can establish the operating mode of the headset (virtual, mixed or augmented reality). The operating mode selector 59 can be implemented in multiple ways, for example by means of a three-position selector in the form of a wheel or a sliding bar, or by means of a connected push button which changes operating mode each time it is pressed. When the user activates the operating mode selector 59, the control unit 50 detects the new position and changes the operating mode of the headset to the selected mode. For example, if the user changes from mixed reality mode (Figure 2A) to virtual reality mode (Figure 2B), the control unit 50 is in charge of placing the motorised lenses 15 and the at least one motorised mirror 14 in an extended position, in front of the field of view of the user, by means of controlling the corresponding motors. Furthermore, the control unit 50 informs the smartphone 19, using the established wireless communication 51, of the operating mode selected by the user. The smartphone 19 can thereby be adapted to the operating mode selected for the depiction of images on the display. For example, if the control unit 50 informs the smartphone 19 that the current operating mode is augmented reality, the smartphone 19 activates at least one of its rear cameras for capturing the real external image 10 reflected by the mirror system 16 of the headset and composing an augmented image from the acquired image, showing on its display the augmented image, which is projected onto the at least one motorised mirror 14.

In another embodiment, it is the smartphone 19 that determines, through an ad hoc application, the operating mode of the headset 1, communicating it to the control unit 50 of the headset 1 through the wireless communication 51 established between both devices, for example through an order, command or instruction to change operating mode. Once the control unit 50 receives the order to change the operating mode, the control unit 50 then performs the corresponding actions for executing the change in operating mode (e.g., from virtual reality to mixed reality) by means of activating the motors of the motorised mirror and lenses.

## Claims

1. A mixed, virtual and augmented reality headset, comprising:
a front casing (2) suitable for being secured to the head (40) of a user;
a curved holographic display (5) located in the front portion of the headset and configured for reflecting a projected image (11) via the display of a smartphone (19) and simultaneously allowing the user to see through same;
a housing in the front casing (2) for receiving the smartphone (19) facing the holographic display (5);
at least one motorised mirror (14) configured for being located in a withdrawn position outside the field of view of the user, or in an extended position in front of the holographic display (5), in the field of view of the user, for reflecting the projected image (11) via the display of the smartphone (19);
two motorised lenses (15) configured for being located in a withdrawn position, outside the field of view of the user, or in an extended position in front of the pupils (13) of the user;
a mirror system (16) configured for reflecting a real external image (10) with respect to the headset (1) towards a camera of the smartphone (19); and
a control unit (50) in charge of controlling the position of the motorised lenses (15) and of the at least one motorised mirror (14), so that the motorised mirror (14) and motorised lenses (15) are in the withdrawn position for the mixed reality mode and in the extended position for the augmented and virtual reality modes.

2. The headset according to claim 1, comprising a mirror mount (22) mounting at least one motorised mirror (14), with the mirror mount (22) being guided on the sides (18) of the front casing (2) and operated by at least a first motor (21) between a withdrawn position in the upper portion of the front casing (2) and an extended position in front of the field of view of the user.

3. The headset according to any of the preceding claims, comprising at least a first transmission shaft (24) operated by a motor (21) for the linear movement of a first threaded mount (26) of each motorised lens (15) in the direction perpendicular to the sides (18) of the front casing (2).

4. The headset according to any of the preceding claims, comprising an eye tracking system formed by at least one camera (56) for detecting the position of the pupils (13) of the user, wherein the control unit (50) is configured for controlling the position of the motorised lenses (15) based on the detected position of the pupils (13).

5. The headset according to claims 3 and 4, wherein the eye tracking system has, for each motorised lens (15), a second transmission shaft (45) operated by a motor (25) for the linear movement of a lens mount (30) of the motorised lens (15) between opposite ends of the respective first threaded mount (26).

6. The headset according to any of the preceding claims, wherein the housing for receiving the smartphone (19) is included in a retractable or extractable tray (3) located in the upper portion of the front casing (2).

7. The headset according to any of the preceding claims, wherein the mirror system (16) comprises a first mirror (32) configured for receiving and reflecting a real external image (10) coming from the exterior of the front casing (2), and at least one additional mirror (33) for reflecting the image reflected in a front camera of the smartphone.

8. A mixed, virtual and augmented reality system, comprising:
a headset (1) according to any of the preceding claims; and
a smartphone (19) housed in the front casing (2) of the headset (1) and configured for establishing wireless communication (51) with the control unit (50) of the headset (1) for determining a current operating mode of the headset (1) among a plurality of operating modes.

9. The system according to claim 8, wherein the operating modes of the headset include an augmented reality mode, and wherein the smartphone (19) is configured, when the augmented reality mode is determined as the current operating mode of the headset (1), for:
acquiring a real external image (10) reflected by the mirror system (16) of the headset (1);
composing an augmented image from the acquired image; and
showing the augmented image on the display.

## Patentansprüche

1. Helm für gemischte, virtuelle und erweiterte Realität, Folgendes umfassend:
ein vorderes Gehäuse (2), das geeignet ist, am Kopf (40) eines Benutzers befestigt zu werden;
ein gekrümmtes holografisches Display (5), das sich im vorderen Abschnitt des Helms befindet und so ausgebildet ist, dass es ein projiziertes Bild (11) über das Display eines Smartphones (19) wiedergibt und gleichzeitig dem Benutzer erlaubt, durch dasselbe hindurchzusehen;
eine Aufnahme im vorderen Gehäuse (2) zur Unterbringung des Smartphones (19), das dem holografischen Display (5) zugewandt ist;
mindestens einen motorisierten Spiegel (14), der so ausgebildet ist, dass er sich in einer zurückgezogenen Position außerhalb des Sichtfeldes des Benutzers oder in einer ausgefahrenen Position vor dem holografischen Display (5) im Sichtfeld des Benutzers befindet, um das projizierte Bild (11) über das Display des Smartphones (19) wiederzugeben;
zwei motorisierte Linsen (15), die so ausgebildet sind, dass sie sich in einer zurückgezogenen Position außerhalb des Sichtfeldes des Benutzers oder in einer ausgefahrenen Position vor den Pupillen (13) des Benutzers befinden;
ein Spiegelsystem (16), das so ausgebildet ist, dass es ein echtes externes Bild (10) in Bezug auf den Helm (1) zu einer Kamera des Smartphones (19) wiedergibt; und eine Steuereinheit (50), die dafür zuständig ist, die Position der motorisierten Linsen (15) und des mindestens einen motorisierten Spiegels (14) zu steuern, so dass sich der motorisierte Spiegel (14) und die motorisierten Linsen (15) in der zurückgezogenen Position für den Modus der gemischten Realität und in der ausgefahrenen Position für die Modi der erweiterten und der virtuellen Realität befinden.

2. Helm gemäß Anspruch 1, der eine Spiegelhalterung (22) umfasst, an der mindestens ein motorisierter Spiegel (14) gehaltert ist, wobei die Spiegelhalterung (22) an den Seiten (18) des vorderen Gehäuses (2) geführt wird und von mindestens einem ersten Motor (21) zwischen einer zurückgezogenen Position im oberen Abschnitt des vorderen Gehäuses (2) und einer ausgefahrenen Position vor dem Sichtfeld des Benutzers betätigt wird.

3. Helm gemäß einem der vorhergehenden Ansprüche, der mindestens eine erste Übertragungswelle (24) umfasst, die von einem Motor (21) für die lineare Bewegung einer ersten Gewindehalterung (26) jeder motorisierten Linse (15) in der Richtung senkrecht zu den Seiten (18) des vorderen Gehäuses (2) betätigt wird.

4. Helm gemäß einem der vorhergehenden Ansprüche, der ein Augenverfolgungssystem umfasst, das durch mindestens eine Kamera (56) zum Erfassen der Position der Pupillen (13) des Benutzers gebildet wird, wobei die Steuereinheit (50) zum Steuern der Position der motorisierten Linsen (15) auf der Grundlage der erfassten Position der Pupillen (13) ausgebildet ist.

5. Helm gemäß Anspruch 3 und 4, wobei das Augenverfolgungssystem für jede motorisierte Linse (15) eine zweite Übertragungswelle (45) aufweist, die von einem Motor (25) für die lineare Bewegung einer Linsenhalterung (30) der motorisierten Linse (15) zwischen gegenüberliegenden Enden der jeweiligen ersten Gewindehalterung (26) betätigt wird.

6. Helm gemäß einem der vorhergehenden Ansprüche, wobei die Aufnahme zur Unterbringung des Smartphones (19) in einem einziehbaren oder extrahierbaren Fach (3) eingeschlossen ist, das sich im oberen Abschnitt des vorderen Gehäuses (2) befindet.

7. Helm gemäß einem der vorhergehenden Ansprüche, wobei das Spiegelsystem (16) einen ersten Spiegel (32) umfasst, der so ausgebildet ist, dass er ein echtes externes Bild (10), das von der Außenseite des vorderen Gehäuses (2) kommt, empfängt und wiedergibt, und mindestens einen zusätzlichen Spiegel (33), der das in einer Frontkamera des Smartphones wiedergegebene Bild wiedergibt.

8. System für gemischte, virtuelle und erweiterte Realität, Folgendes umfassend:
einen Helm (1) gemäß einem der vorhergehenden Ansprüche; und
ein Smartphone (19), das in dem vorderen Gehäuse (2) des Helms (1) aufgenommen ist und zum Herstellen einer drahtlosen Verbindung (51) mit der Steuereinheit (50) des Helms (1) zum Bestimmen eines aktuellen Betätigungsmodus des Helms (1) unter einer Vielzahl von Betätigungsmodi ausgebildet ist.

9. System gemäß Anspruch 8, wobei die Betätigungsmodi des Helms einen Modus der erweiterten Realität einschließen, und wobei das Smartphone (19), wenn der Modus der erweiterten Realität als aktueller Betätigungsmodus des Helms (1) bestimmt wird, für Folgendes ausgebildet ist:
Aufnehmen eines echten externen Bildes (10), das von dem Spiegelsystem (16) des Helms (1) wiedergegeben wird;
Zusammensetzen eines erweiterten Bildes aus dem aufgenommenen Bild; und
Anzeigen des erweiterten Bildes auf dem Display.

## Revendications

1. Casque de réalité mixte, virtuelle et augmentée, comprenant :
un boîtier avant (2) adapté pour être fixé sur la tête (40) d'un utilisateur ;
un écran holographique incurvé (5) situé dans la partie avant du casque et configuré pour refléter une image projetée (11) via l'écran d'un smartphone (19) et permettre simultanément à l'utilisateur de voir à travers celui-ci ;
un logement dans la partie avant du casque (2) pour recevoir le smartphone (19) faisant face à l'affichage holographique (5) ;
au moins un miroir motorisé (14) configuré pour être situé dans une position retirée hors du champ de vision de l'utilisateur, ou dans une position étendue devant l'affichage holographique (5), dans le champ de vision de l'utilisateur, pour réfléchir l'image projetée (11) via l'écran du smartphone (19) ;
deux lentilles motorisées (15) configurées pour être situées dans une position retirée, hors du champ de vision de l'utilisateur, ou dans une position étendue devant les pupilles (13) de l'utilisateur ;
un système de miroir (16) configuré pour réfléchir une image externe réelle (10) par rapport au casque (1) vers une caméra du smartphone (19) ; et une unité de contrôle (50) chargée de contrôler la position des lentilles motorisées (15) et d'au moins un miroir motorisé (14), de sorte que le miroir motorisé (14) et les lentilles motorisées (15) soient en position retirée pour le mode de réalité mixte et en position étendue pour les modes de réalité augmentée et virtuelle.

2. Casque selon la revendication 1, comprenant une monture de miroir (22) portant au moins un miroir motorisé (14), la monture de miroir (22) étant guidée sur les côtés (18) du boîtier avant (2) et actionnée par au moins un premier moteur (21) entre une position retirée dans la partie supérieure du boîtier avant (2) et une position déployée devant le champ de vision de l'utilisateur.

3. Casque selon l'une quelconque des revendications précédentes, comprenant au moins un premier arbre de transmission (24) actionné par un moteur (21) pour le déplacement linéaire d'une première monture filetée (26) de chaque lentille motorisée (15) dans la direction perpendiculaire aux côtés (18) du boîtier avant (2).

4. Le casque selon l'une quelconque des revendications précédentes, comprenant un système de suivi oculaire formé par au moins une caméra (56) pour détecter la position des pupilles (13) de l'utilisateur, dans lequel l'unité de commande (50) est configurée pour commander la position des lentilles motorisées (15) en fonction de la position détectée des pupilles (13).

5. Casque selon les revendications 3 et 4, dans lequel le système de suivi oculaire comporte, pour chaque lentille motorisée (15), un second arbre de transmission (45) actionné par un moteur (25) pour le déplacement linéaire d'une monture de lentille (30) de la lentille motorisée (15) entre les extrémités opposées de la première monture filetée (26) respective.

6. Casque d'écoute selon l'une quelconque des revendications précédentes, dans lequel le logement destiné à recevoir le smartphone (19) est inclus dans un plateau rétractable ou extractible (3) situé dans la partie supérieure du boîtier avant (2).

7. Casque selon l'une quelconque des revendications précédentes, dans lequel le système de miroirs (16) comprend un premier miroir (32) configuré pour recevoir et réfléchir une image extérieure réelle (10) provenant de l'extérieur du boîtier avant (2), et au moins un miroir supplémentaire (33) pour réfléchir l'image réfléchie dans une caméra frontale du smartphone.

8. Système de réalité mixte, virtuelle et augmentée, comprenant :
un casque (1) selon l'une quelconque des revendications précédentes ; et.
un smartphone (19) logé dans le boîtier avant (2) du casque (1) et configuré pour établir une communication sans fil (51) avec l'unité de commande (50) du casque (1) pour déterminer un mode de fonctionnement actuel du casque (1) parmi une pluralité de modes de fonctionnement.

9. Système selon la revendication 8, dans lequel les modes de fonctionnement du casque comprennent un mode de réalité augmentée, et dans lequel le smartphone (19) est configuré, lorsque le mode de réalité augmentée est déterminé comme le mode de fonctionnement actuel du casque (1), pour :
acquérir une image externe réelle (10) réfléchie par le système de miroir (16) du casque (1) ;
composer une image augmentée à partir de l'image acquise ; et
montrer l'image augmentée sur l'affichage.
